# EUROPEAN PATENT APPLICATION

(11) **EP 2 299 692 A1**
(43) Date of publication of application: **23.03.2011**
(21) Application number: 09290705.4
(22) Date of filing: 14.09.2009
(51) Int. Cl.: H04N 5/00, H04N 7/24

(54) **An electronic device and associated method**

(71) Applicant: NXP B.V., 5656 AG Eindhoven (NL)
(72) Inventor: Mutz, Stephane, Redhill, Surrey RH1 1DL (GB); Tison, Christophe, Redhill, Surrey RH1 1DL (GB)
(74) Representative: Williamson, Paul Lewis

(57) **Abstract**

An electronic device having a first and second functional state, the device comprising a receiver configured to receive signalling, a processor, one or more hardware components that are able to provide a one or more functions, and memory having one or more identification codes stored thereon. A first set of functions selected from the one or more functions are available for use in the first state, and a second set of functions are available for use in the second state. The processor is configured to process received signalling in accordance with the identification codes in order to determine an intended state of the device, and to set the state of the device in accordance with the determined intended state.

## Description

The present disclosure relates to the field of electronic devices, associated methods and related computer programs. Certain disclosed aspects/embodiments relate to devices that may be intended to be stationery (such as a television, personal computer, or the like) or even portable (such as mobile phones, personal digital assistants [PDAs], or the like).

Electronic devices currently being manufactured typically provide at least one function. Each of these functions can be provided by hardware components such as integrated circuits (IC chips) that are configured to provide particular functions. These IC chips are often provided by companies such as Original Equipment Manufacturers (OEMs) or the like.

Each electronic device is also typically manufactured to meet a particular design specification with a particular purpose in mind (for example, a device geared towards providing mobile telecommunication functionality, or television program viewing functionality, or the like). The criteria of the design specification and the functions to be provided are typically formulated in view of the current standard for the technology at the time of manufacture.

Hardware components that provide additional functionality that lies outside the remit of the design, or in addition to the standard technology, are not typically included on an IC as this can add extra cost. Furthermore, manufacturers may not wish to add related functionality to their product lines until/unless the future of that technology is considered to be viable.

Manufacturers of electronic devices that use IC chips provided by OEMs are typically not willing to include new features or additional functionality on a device unless there is a reasonable expectation that the end user is willing to pay for the added functions. This can mean that manufacturers prefer to trial devices with added functionality in limited quantities. This approach is very cumbersome and affects significantly the logistical flow for both device manufacturers and OEMs alike. As a consequence, potentially valuable features can be left aside or can be given away for free.

Furthermore, the consumer may be forced to frequently upgrade devices as technology changes and as the technology in certain devices becomes obsolete or incompatible with current trends.

The listing or discussion of a prior-published document or any background in this specification should not necessarily be taken as an acknowledgement that the document or background is part of the state of the art or is common general knowledge. One or more aspects/embodiments of the present disclosure may or may not address one or more of the background issues.

In a first aspect, there is provided an electronic device having a first and second functional state, the device comprising:
a receiver configured to receive signalling,
a processor connected to the receiver,
one or more hardware components that are electrically connected to the processor and that are configured to be able to provide one or more functions, wherein:
   a first set of functions selected from the one or more functions are available for use in the first state, and
   a second set of functions selected from the one or more functions are available for use in the second state, the device further comprising:
memory connected to the processor, the memory configured to have one or more identification codes stored thereon,
   wherein the processor is configured to process signalling received by the receiver in accordance with one or more of the identification codes to determine an intended state of the device, the processor further configured to set the state of the device in accordance with the determined intended state.

By configuring the processor in this way, it is possible to make further functions of the plurality available for use upon receiving signalling that instructs the device to be in a particular intended state. These further functions can be made available for use when the device is in the field. The processor could be a separate hardware unit or a module/block in an integrated circuit. The processor and/or memory may be electrically connected to other components of the electronic device.

The hardware components may be physical chips/circuits that physically configure/reconfigure themselves to provide specific functions (such as IC's, application specific IC's, functional hardware units inside an IC, etc). This may be via transistor switching, physical switches or the like.

The electronic device may comprise one or more integrated circuits.

The memory may have a feature mask stored thereon. The feature mask may comprise one or more settable flags that correspond to, and define, the availability of one or more of the functions. The feature mask may be provided by an n-bit control register. The processor may be configured to set the state of the device by setting or unsetting flags of the feature mask. This configuration can allow the processor to control the availability and operation of the plurality of functions using the feature mask.

The flags of the feature mask may each be associated with one or more functions of the plurality of functions such that the state of the settable flags determines the availability of the one or more associated functions. Using the feature mask and the flags allows the availability of each function to be conveniently controlled by setting of the flags. This can provide a centralised way of controlling the availability of the plurality of functions. The act of making functions available or unavailable may be respectively likened to locking or unlocking functions for use.

The feature mask may be stored in non-volatile memory. In this way, the state of the device can be retained by the device when it is turned off. The first and/or second sets of functions may comprise zero, one, a plurality, or all of the one or more functions.

The processor may be configured to process the signalling received at the receiver in order to identify whether the signalling provides instructions describing the intended state of the device. The processor may then set the state of the device in accordance with the instructions. In this way, signalling that is not intended to change the state of the device can effectively be discarded. The instructions may contain information that allows for the flags of the feature mask to be set according to the intended state of the device.

The processor may be configured to check the instructions against the identification codes, and may be further configured to only set the state of the device in accordance with the instructions when the instructions correspond to one or more, or all of the identification codes. This allows for a verification step which ensures that only the instructions intended for a particular device are performed by that particular device. Therefore, instructions that do not correspond with one or more, or all of the identification codes will not, or may not, be performed. It will be appreciated that this feature provides a degree of security and control over how the state of the device is changed. This can prevent unauthorised parties from altering the state of the device.

The processor may be configured to only set the state of the device in accordance with the instructions when the instructions correspond to a date stamp identification code stored on the memory. The use of a date stamp identification code allows for instructions to only be attributed to devices having been made at a certain time, before or after a certain time, or within a certain time period. Therefore, devices that receive signalling instructions that do not match the date stamp identification code do not perform said instructions. This can provide functionality for a user to control which devices are to be affected by a state change, and can take advantage of date stamps that are already present in known IC's/devices.

The processor may be configured to check correspondence between the instructions and one or more of the identification codes by comparing the instructions against said identification codes. The identification codes may comprise one or more codes of the following: date stamp, client ID, manufacturer ID, public key, private key, device type, device version, device configuration, region code or the like.

The instructions may be directly compared or checked against the respective identification codes, or they may be processed in a number of other ways. The processor may be configured to process the signalling with one or more of said identification codes to determine said instructions by one or more of: decrypting, encrypting, comparing, matching, summing, multiplying, convolving, devolving, splitting, joining, hashing, compressing, decompressing, bit wise manipulating, shuffling, or deshuffling. The same processes may be performed in order to check the instructions against said identification codes.

The instructions may comprise one or more of: details regarding which functions/sets of functions are to be made available for use, which functions/sets of functions are to be made unavailable for use, which functions are to be turned on or off, which functions are to be limited in their functionality, which functions are to be enhanced in their functionality, which functions are to be made primary/second/tertiary/etc functions, a period of time and/or a start time from which particular functions are to be made available or unavailable, modify the number of times a function can be used, and the like.

The processor may be configured to set the state of the device in accordance with the feature mask by making the first or second set of functions available for use, and/or making the other set of functions unavailable for use. The switching of available functions can allow the device to switch functionalities (as defined/presented by the selected set of functions).

The second set of functions may comprise a greater number of functions than the first set of functions. This can allow the device to be moved from a state of limited functionality to a state of increased or full functionality (relative to the first state). Of course, in some embodiments, the device may have more than two functional states.

The device may be configured such that there is at least one function that is available for use in the second state that is not available for use in the first state. This configuration can allow the device to be moved between two states that provide differing functionalities.

The one or more hardware components may provide one or more further sets of functions selected from the plurality of functions that are available for use in one or more further functional states.

The memory may comprise one or more parameters or codes that are configurable/adjustable in accordance with the state of the device. In this way, a hardware component can be considered as providing different functionality by setting a parameter and/or code stored in memory that is associated with the intended state of the device.

In a further aspect there is provided a method for controlling one or more hardware components configured to be able to provide a plurality of functions of a device, the device having a first and second functional state, the device comprising:
one or more hardware components configured to be able to provide a plurality of functions, wherein:
   a first set of functions selected from the plurality of functions are available for use in the first state, and
   a second set of functions selected from the plurality of functions are available for use in the second state, the device further comprising
memory configured to have one or more identification codes stored thereon, the method comprising:
   receiving signalling;
   processing said signalling in accordance with the one or more identification codes to determine an intended state of the device; and
   setting the state of the device in accordance with the determined intended state.

In a further aspect, there is provided a method for controlling one or more hardware components configured to be able to provide a plurality of functions of a device, the device having a first and second functional state, the device comprising:
a receiver configured to receive signalling,
a processor electrically connected to the receiver,
one or more hardware components that are electrically connected to the processor and that are configured to be able to provide a plurality of functions, wherein:
   a first set of functions selected from the plurality of functions are available for use in the first state, and
   a second set of functions selected from the plurality of functions are available for use in the second state, the device further comprising
memory electrically connected to the processor, the memory configured to have one or more identification codes stored thereon,
   wherein the processor is configured to process signalling received by the receiver in accordance with one or more of the identification codes to determine an intended state of the device, the processor further configured to set the state of the device in accordance with the determined intended state, the method comprising:
   receiving signalling;
   processing said signalling in accordance with the one or more identification codes to determine an intended state of the device; and
   setting the state of the device in accordance with the determined intended state.

In another aspect described herein, there is provided a module comprising the electronic device of the first aspect. The module may be configured to be suitable for introduction into a further electronic device. This can allow a further electronic device to have a plurality of functions, which can be made available or unavailable using said signalling as in the aspects described above. An example of a further electronic device is a television set that comprises a first type of device that is an integrated circuit.

In yet another aspect there is provided a computer readable medium comprising computer code stored thereon, the computer code being configured to, when executed on a computer, perform any method disclosed herein or for configuring any device disclosed herein.

The computer program may be a software implementation, and the computer may be considered as any appropriate hardware, including a digital signal processor, a microcontroller, and an implementation in read only memory (ROM), erasable programmable read only memory (EPROM) or electronically erasable programmable read only memory (EEPROM), as non-limiting examples. The software may be an assembly program.

The computer program may be provided on a computer readable medium such as a disc or a memory device, or may be embodied as a transient signal. Such a transient signal may be a network download, including an internet download.

In still another aspect, there is provided a system for controlling the functions provided by one or more devices, the system comprising:
one or more of the devices of the first aspect; and
a transmitter configured to transmit signalling representative of an intended state of a device.

The present disclosure includes one or more corresponding aspects, embodiments or features in isolation or in various combinations whether or not specifically stated (including claimed) in that combination or in isolation. Corresponding means for performing one or more of the discussed functions are also within the present disclosure.

A description is now given, by way of example only, with reference to the accompanying drawings, in which:-
Figure 1 shows a schematic diagram of an electronic device having a plurality of functions according to a first embodiment.
Figure 2a shows schematically processing performed by a device according to an embodiment of the invention.
Figure 2b shows schematically processing performed by a device according to an embodiment of the invention.
Figure 2c shows schematically processing performed by a device according to an embodiment of the invention.
Figure 3a shows an illustration of a feature mask utilised by a device according to an embodiment, wherein the device is in a first state.
Figure 3b shows an illustration of the feature mask when a device is in a second state.
Figure 3c shows an illustration of the feature mask when a device is in a third state.
Figure 4 shows a flowchart illustrating a method of controlling the plurality of functions.
Figure 5 illustrates schematically a computer readable media providing a program according to an embodiment of the present invention.
Figure 6 illustrates schematically feature sets according to different functional states of a device according to an embodiment of the invention.

In one or more embodiments described herein, there is provided an electronic device having a first and second functional state. The processor is configured to process received signalling in accordance with identification codes stored in memory in order to determine an intended state of the device, and to set the state of the device in accordance with the determined intended state. Setting the state of the device may include making one or more functions provided by hardware components available for use.

For example, the device may initially be in a first state in which it provides a first number of functions for use by a user. Upon receiving, and processing, appropriate signalling, a processor of the device determines that an intended state of the device is the second state. Once the processor has determined this, it sets the device to be in the second state so as to allow the second set of functions to be available for use by a user. As the device is no longer in the first state, the functions of the first set may no longer be available for use.

By configuring the device in this way, it is possible to provide a device with many functions, and to control the availability of these functions using signalling sent to the device. This can provide for advantages such as allowing certain functions/features provided by hardware components of the device to be 'unlocked' and made available for use upon reception of appropriate signalling. Examples of how this can be implemented are provided below.

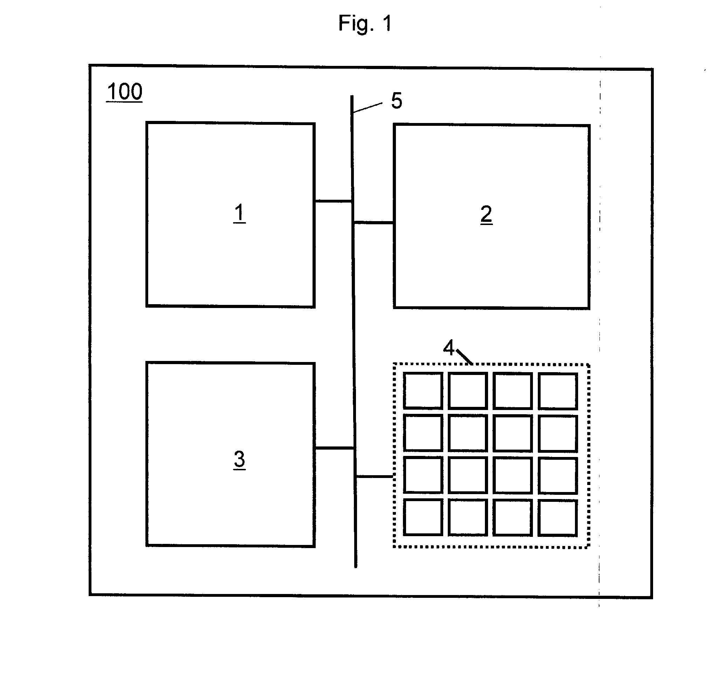

A first embodiment of the present invention will now be described with reference to Figure 1.

Shown in Figure 1 is an electronic device 100. The device 100 comprises a receiver 1, memory 2, processor 3 and a number of hardware components 4. The device also comprises a data bus line 5. It will be appreciated that the bus line 5 is provided to allow data exchange between the receiver 1, memory 2, processor 3 and hardware components 4.

The receiver 1 is a wireless antenna, at least in this embodiment. The skilled person will appreciate that the antenna may be any type of antenna known in the art. As antenna design is well known in the art, the configuration of receiver 1 will not be described in further detail.

The skilled person will appreciate that in other embodiments the receiver 1 may be a wired connection to a network, or to another device, or to a wireless transmitter/receiver/transponder, or any other type of technology that could allow for signalling to be received by the device 100 such as a terminal or connection pin of the processor 3. The receiver 1 may be a pin of an integrated circuit that is configured for receiving signally, for example directly or indirectly from an antenna or remote data transmitter.

The memory 2 is a computer readable medium. In this embodiment, the memory 2 is solid state memory and is integrated within the device 100. The skilled person will appreciate that, in other embodiments, the memory 2 may be a hard drive, the memory 2 may be made internal to the device 100, external to the device 100, removable/replaceable from within the device 100, or connectable to the device 100.

The memory 2 has a number of identification codes stored thereon. These identification codes can be stored strings that encode certain attributed of the device 100 into the memory 2. This can enable a particular device 100 to be identified from many devices even though the particular device 100 may be one of many similar devices. In this embodiment, the complete set of identification codes is unique, or at least distinct, to a batch of devices. An example of a batch includes devices that are manufactured at a particular time, during a particular time period, before or after a certain time, devices manufactured for a particular client, different types of devices, or any combination of the above or the like. The skilled person will appreciate that in other embodiments the identification codes may be unique for every device. The codes are available to the processor 3 for use when processing received signalling.

In this embodiment, the identification codes comprise:
(1) Private/public key - This code is included so as to allow for decryption of encrypted signalling received by the receiver 1. In this embodiment, the private/public key arrangement is provided so that the processor 3 can use the key to decrypt signalling, to thereby establish what information or instructions the received signalling may be carrying. In other embodiments, the key is used merely to check the signalling against the public/private key as per public/private key secure transmission protocols. This is so that the processor can check whether the signal has come from an authorised source or not. The use of private/public keys to establish secure transmission and verification of such transmissions is well known in the art.
(2) Client Identification - This code is particular to the client for whom the device was manufactured. In this embodiment, the client ID is defined as a six digit reference number which is assigned to a particular client (for example, 442211 is allocated to 'Generic Company Inc', 442212 is allocated to 'A Different Company Ltd', and so on). The skilled person will appreciate that in other embodiments the code may take another format other than a reference number, or the code may actually comprise the name of the company. The inclusion of this code is useful as it means that if a particular client wishes for their devices to have enhanced functionality (the enhanced functionality being provided by a function on an IC that is also sold by an OEM manufacturer to other clients), it is possible for a signal to be sent out to any and all devices but to only upgrade the devices that correspond to that particular client. If a device does not have a particular client ID code stored in memory, then the signalling may not be accepted by the device and the device may not receive the upgrade.
(3) Product code - This code is particular to the actual device that has been manufactured. For example, one reference number may be assigned to a particular type of integrated circuit or to a particular model of television, whilst another may be assigned to a different integrated circuit or a particular model of DVD player. In this embodiment, a similar reference system as used for the client ID catalogue system is also used. The skilled person will appreciate that, in other embodiments, other reference systems may be used. This code can also be useful as it can ensure that only particular types of devices are affected by signalling sent out to instruct a change in functionality (as per the example given in the client ID code section above).
(4) Date stamp - This code is particular to the period in which the device 100 was manufactured. In this embodiment, the date stamp defines a month and year in which the electronic device was manufactured (for example, 07/2009). The skilled person will appreciate that, in other embodiments, the date stamp may be as precise as a date and time (for example, 16:36:00 27/07/2009), or as broad as a year of manufacture (just 2009). The date stamp may also define a range of manufacturing dates (for example, 01/2009 - 07/2009). As discussed above, this code is useful as it allows for a signal to be sent out that only affects devices made in/during/before/after a certain time period. In another embodiment, a date stamp may not be necessary. Instead a timer can be used to allow for the device to be upgraded for a set period of time as instructed by received signalling (like a trial period for a feature). Such an example will be discussed later.

In this embodiment, the date stamp code is 'burned' or 'stamped' into non-volatile ROM type memory (or any other one time programmable (OTP) memory). This can provide a permanent data stamp. The other codes may also be stored in this way, or they may be stored on memory that can be overwritten multiple types (multi-time programmable (MTP) memory). As is understood in the art, re-writable memory can require its own power source.

The identification codes are provided so that they can be used by the processor 3 to process any received signalling and determine whether the state of the device is to be changed. This is discussed in more detail below.

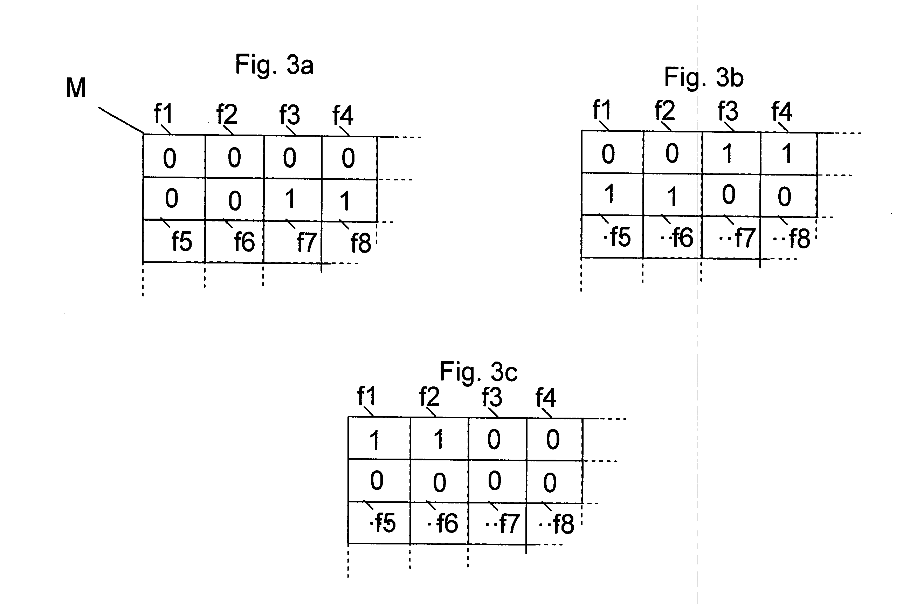

The memory 2 also stores a feature mask M. This feature mask M comprises an array of flag elements (shown in Figures 3a-3c). Each of the flags can be changed between an 'on' state and 'off' state. Each of the flags is to be linked with a function provided by the hardware components, such that when the flag is set to 'on' or 'off', the linked function will be 'on/available' or 'off/available' accordingly. In this embodiment, the flags are binary bits, with '0' describing/setting an 'off/unavailable' state, and '1' describing/setting an 'on/available' state. In other embodiments, the signalling can be used to change other parameters such as numeric values, keys and the like, as well as setting a code.

The skilled person will appreciate that in other embodiments the flags may be set to have a variety of different values to control the functionality provided by their linked functions. For example, for an antenna function, the flag may be set to 'on', 'off', 'active', 'passive', 'semi-active', etc.

The interaction of the feature mask M with the rest of the device is described in more detail below.

The processor 3 is, in this embodiment, an Application Specific Integrated Circuit (ASIC) that is dedicated to the operation of this device. The skilled person will appreciate that, in other embodiments, the processor 3 may be any another type of processor, such as a general purpose Central Processing Unit (CPU).

The processor 3 is capable of processing signalling received from the receiver 1 in accordance with the identification codes stored on the memory 2. Two purposes of processing the signalling include:
(1) to establish/determine whether the signalling comprises any instructions. Any signalling may be received by the receiver, and it is necessary to establish whether the signalling comprises any instructions that could be acted upon. The processor is therefore configured to be able to process received signalling to establish/determine whether the signalling carries any appropriate instructions. This processing could be performed by decryption for example; and
(2) to verify that any received instructions correspond to that particular device 100. This can be used to confirm that any established instructions are intended for a specific device. The processor may only execute the instructions upon successful verification, for example by checking the data of manufacture stored in the memory of the device against data provided in the instructions.

The processor 3 is also capable of setting the state of the device 100 in accordance with the instructions determined by the processing of the signalling. The processor 3 is capable of setting/resetting flag elements of the feature mask M (as mentioned above and illustrated in Figures 3a to 3c) to control the availability of each of the functions provided by the hardware components. This process is discussed in more detail in relation to the method of operation.

The hardware components 4 comprise a plurality of electronic/electrical components that can each perform a particular function. For example, the hardware components 4 may comprise a HD chip configured to provide 720p definition, and an HD chip configured to provide 1080i definition. Some of the components 4 may also provide a number of different functions (such as the antenna example given above). Some of the components 4 may provide one or more function when in combination with each other.

In other examples, hardware components can be used to expand from 8 bits to 12 bits colour, to improve audio quality, or to interface with certain peripherals (for example Bluetooth, SATA and the like).

The hardware components 4 are physical chips/circuits that physically reconfigure themselves to provide specific functions (for example, via transistor switching, or the like). These components 4 are to be physically/electronically controlled via the settable feature mask and the processor 3.

The assembly of the device 100 of Figure 1 will now be described.

In this embodiment, the device 100 is formed on a silicon substrate to form an integral ASIC. In other embodiments, the device 100 can be formed on a printed circuit board (PCB) or printed wiring board (PWB), or can be integrated with an epoxy resin to form an integral module, or the like. The skilled person will appreciate that the respective hardware components 4 of the device 100 may be spread out separately-throughout another further device such as a different PCB or integrated circuit, to allow for control of the plurality functions for that further device.

The receiver 1, memory 2, processor 3 and hardware components 4 are all soldered to the printed circuit board. All of the components are electrically connected to the bus line 5 to allow them to be electrically interconnected.

The receiver 1 is electrically connected to the bus line 5 so that any received signalling can be electrically transmitted to the processor 3.

The memory 2 is also electrically connected to the bus line 5 so that the processor is able to access the identification codes stored on the memory, as well as change the settings of the flags of the feature mask M stored on the memory.

The hardware components 4 are also each electrically connected to the bus line 5 so that the processor 3 can use the settings dictated by the flags of the feature mask M to control the availability of each of the functions provided by the components 4.

In another embodiment, the receiver 1, memory 2 and hardware components 4 may be electrically connected to the processor 3 directly rather than using bus line 5. This can allow for direct connection between the receiver 1, memory 2 and hardware components 4, and the processor 3.

These electrical connections are made via conductive PCB tracks printed on the circuit board. The skilled person will appreciate that they may of course be connected via conductive wiring in other embodiments (like in a printed wiring board embodiment or where the components 1-4 of the device 100 are spread throughout a further device).

The operation of the device 100 will now be described.

As discussed above, the receiver 1 is able to receive incoming signalling (in this embodiment, signalling will be electromagnetic radiation in the radio-wave bandwidth), although in embodiments where the device 100 is an integrated circuit (IC) the receiver may be a pin of the IC that is configured for receiving data. As the receiver is electrically connected to the processor 3, any received signalling is made available to the processor 3.

As discussed above, the memory 2 has a number of identification codes stored thereon that are provided to the processor 3. The processor 3, being connected to the memory 2, is able to access the codes and thereby process the received signalling in accordance with the identification codes.

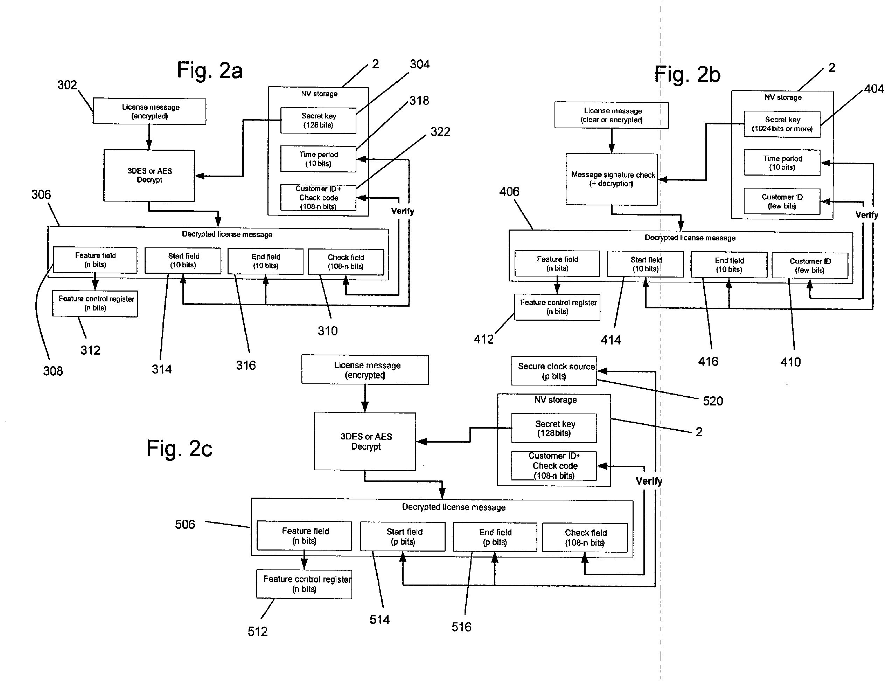

With reference to Figures 2a-2c, a description of examples of how the processor 3 processes the received signalling in accordance with identification codes stored in memory will be provided.

The processor 3 can apply the private/public key against the received signalling to decode/decrypt any information or instructions the signalling may be carrying. This can identify whether the signalling has come from an authorised source. The public/private key is applied to the signalling, and each of the respective parts of the signalling (of various bit lengths) are decrypted and made available for processing as described in more detail below.

Figures 2a to 2c illustrate example implementation details of processing performed according to an embodiment of the invention.

Figure 2a illustrates an example where signalling is sent out to update the service functions provided by a television (such as HD technology) and represents an implementation with a secret key. The signalling provides instructions in the form of a license message for changing the state of the available functions.

In this example, signalling carrying an encrypted license message 302 is received, and a private/secret key 304 stored on memory 2 is used to decrypt the message 302, for example using 3DES or AES. In other embodiments, the key 304 may be used simply to verify the authenticity of a signal, rather than for encryption/decryption. Should the public and private keys not match up, then the instructions may not be executed.

The decrypted message 306 contains a feature field 308 comprising one or more bits of data that provide an indicator of the features/functions that are intended for use.

The decrypted license message 306 includes a start time field 314 and an end time field 316 that define a range of times that is checked against a time period 318 stored in non-volatile memory 2 of the device. The time period 318 stored in non-volatile memory 2 of the device represents a time of manufacture and may be stored in one-time programmable memory (OTP). The value of the time period 318 may be set at production time, and may be updated every time period. All ICs produced during a given time period will share the same value.

The decrypted message 306 also contains a check field 310 that is verified with a customer ID and check code 322 stored in memory 2. The check field 310 can be used to confirm that a decrypted license message 306 is actually a valid set of instructions. The client ID code can also be used to ensure that a particular client's products are the only products affected by the instruction signalling. If the client ID verification does not match up with the client ID identification code, then the instructions may not be executed on that device 100.

In some embodiments, the decrypted message 306 may also comprise a product code that can be used to ensure that only particular products are affected by the instruction signalling. Again, should the product verification not match up with a product identification code stored in memory then the instructions may not be executed on that device 100.

Upon verification of the authenticity and applicability of the decrypted license message 306, the upgrade/change in state of the device is performed by setting bits of feature control register 312 in accordance with the feature field 308.

The customer ID and check code 322 and secret key 304 may be burnt into the IC memory 2 at manufacturing time. The time period 318 may be managed by the production facility. The secret key 304 should be protected at all times. The time period field 318 should also be protected from tampering as well.

Other operations other than comparison or matching may be performed between the data of the decrypted license message 306 and the identification codes stored on the memory 2. For example, a verification part of the instructions may be subjected to: encrypting, summing, multiplying, convolving, devolving, splitting, joining, and the like, together with one or more of said identification codes to determine and/or verify the instructions to be performed.

Figure 2b illustrates a similar example, but where the key 404 has a higher bit size to provide more robust security, and where the check field 310 of Figure 2a is replaced by a customer/client ID code 410. Also, whereas 3DES or AES decryption was used in Figure 2a, a message signature check operation, with optional decryption, is used to obtain the data from the licence message 406.

Figure 2c illustrates another similar example, but where the date stamp stored on the memory 2 of Figure 2a is replaced by a timer clock source 520. In this way, a current time can be checked against the range of times defined by the time fields 514, 516 of the decrypted licence message 506 to determine if the feature control register 442 is to be updated.

The timer clock source 520 may be a secure clock source provided by a system associated with the device or may be recoverable from the received signaling/transmission. Such signaling may comprise a secure clock source as is known for conditional access systems. In some embodiments, a secure clock source could be created by the device. However, a secure clock source is a common requirement for many other usages and therefore, it is reasonable for a secure clock source to exist in many systems.

Upon receiving authenticated and applicable instructions in the license message, certain features/functions are unlocked and made available for use for a predetermined time period. This time period is monitored and controlled by the clock source 520. The time period may have already been predetermined on production of the device 100, or it may be set by the license message.

In each of these examples, once the instructions have been authenticated/verified as being applicable to the device 100 that has received the signalling, the processor 3 uses the received instructions to control the availability of the plurality of function by updating the feature control register 312; 412; 512 accordingly.

With reference to Figures 3a-3c, a description will be provided of how the processor 3 applies the instructions to the device 100 upon verification of the instructions.

Figure 3 illustrates a feature mask M, wherein each flag element represents and controls the availability/state of different functions provided by the hardware components 4. The feature mask M is an example of the feature control register of figures 2a to 2c.

Once the instructions for the device have been determined and verified, the processor 3 modifies the flags of the feature mask M by setting them to an appropriate/intended value as set out by the instructions (for example, the feature field 208 of Figure 2a).

For example, Figure 3a shows an initial first functional state in which functions f7 & f8 are set to be on, and functions f1-f6 are set to be off. The device 100 then receives and verifies a set of instructions that instruct the apparatus to turn on functions f3-f6 and to turn off functions f7 & f8 thereby placing the device in a different state of operation.

The processor 3 then sets the flags/bits of the feature mask M such that f3-f6 are set to '1' (these functions now being in an available state) and sets the flags/bits of functions f7 & f8 to '0' (these functions now being in an unavailable state). This action moves the apparatus from the first functional state depicted in Figure 3a to the second functional state depicted in Figure 3b. As can be seen from these figures, each of the functional states has a different set of functions available for use. These functions are determined in accordance with the instructions provided by the signalling.

The device 100 can also be moved into or between any number of further states in accordance with further received instruction signalling. For example, a further set of verified instructions may instruct the device 100 to set features f1 & f2 to be available for use ('1') and features f3-f8 to be unavailable for use ('0' as shown in Figure 3c). In another embodiment, the clock source may be used as a countdown to an absolute date/time, after which any features/functions that were previously made available or unavailable then revert to their alternate state.

In these examples, there is no overlap between the functions available in each of the functional states. The second state has available functions that are not available when the device is in the first state and vice versa.

The skilled person will appreciate that in other embodiments there may be overlap between the functions provided by the functional states. For example, a first state may provide functions f1-f4, and a second state may provide functions f1-f8, such that functions f1-f4 are shared by both functional states.

In this embodiment, the second functional state has a greater number of functions available for use than the first state. In this way, the overall functionality of a device can be upgraded by changing from the first to the second state. The skilled person will appreciate that in other embodiments the second state may have less functions available for use than the first state, or may even have the same number of functions available for use.

It should be noted that any number of functions of the plurality can be made available or unavailable upon reception of such signalling. For example, certain signalling may instruct a particular device to be moved from a state with some functions available to a state where all of the functions are available for use. Provided that the instructions are verified, the processor 3 will then move the device into the corresponding state (having all functions available). Conversely, it is also possible to move the device from a state with some functions being available to a state with no functions being available. It is also possible for a signal to be sent that will cause both of these state changes to occur in reverse.

It should also be noted that a device according to an embodiment of the invention can be implemented in a module (not shown) for introduction into other electronic devices for control over the hardware features/functions. This would allow the device 100 to act as an IC feature management system, allowing for some (or even complete) control over features and functions provided by IC chips. As discussed above, this could be provided as an integrated module, or its components may be spread out within a further device.

In examples where signals are used for controlling the features in other chips, communication between the chips may be physically and/or logically protected (for example, using encryption).

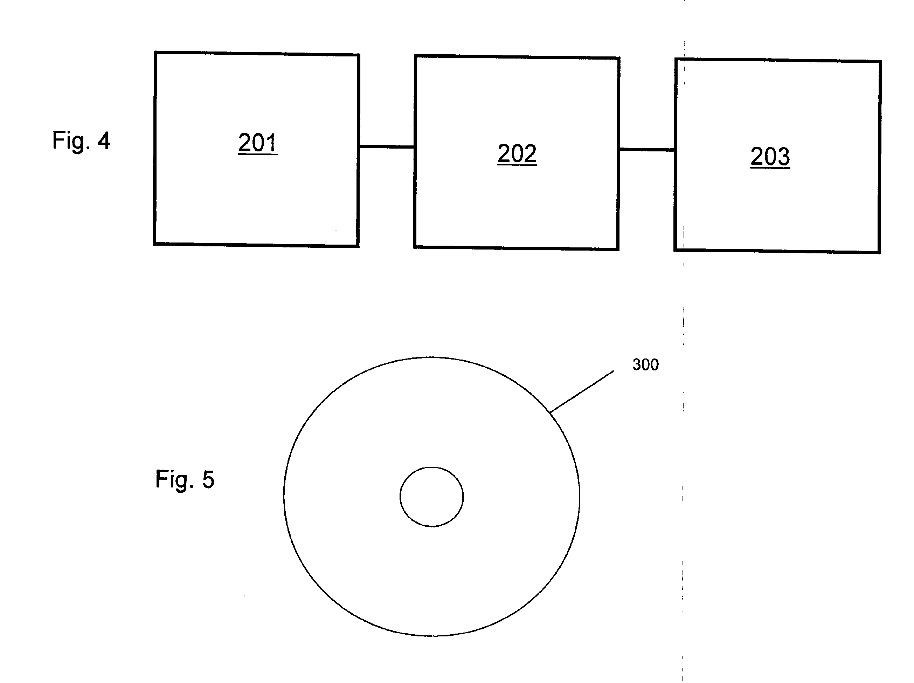

Figure 4 illustrates a method for controlling one or more hardware components configured to be able to provide a plurality of functions of a device according to an embodiment of the invention. The device has a first and second functional state, and also comprises one or more hardware components configured to be able to provide a plurality of functions. A first set of functions selected from the plurality of functions are available for use in the first state, and a second set of functions selected from the plurality of functions are available for use in the second state.

The method comprises, at step 201, receiving signalling. For example, an OEM company may transmit signalling to all televisions manufactured by them instructing a particular client's products to have all features fully unlocked.

At step 202 the method comprises processing said signalling in accordance with the one or more identification codes to determine an intended state of the device. For example, the signalling sent by the OEM company may comprise instructions that correspond to specific client's products and no others, that describe or inform the device of an intended state as desired by the OEM, and the processing may involve making a determination as to whether or not the signalling should be used to change the state of the device.

At step 203 the method comprises setting the state of the device in accordance with the determined intended state. For example, upon verification of the signalling, the specific devices for which the instructions were intended are now moved into the intended state to provide different functionality.

Figure 5 illustrates schematically a computer/processor readable media 500 providing a program according to an embodiment of the present invention. In this example, the computer/processor readable media is a disc such as a digital versatile disc (DVD) or a compact disc (CD). In other embodiments, the computer readable media may be any media that has been programmed in such a way as to carry out an inventive function.

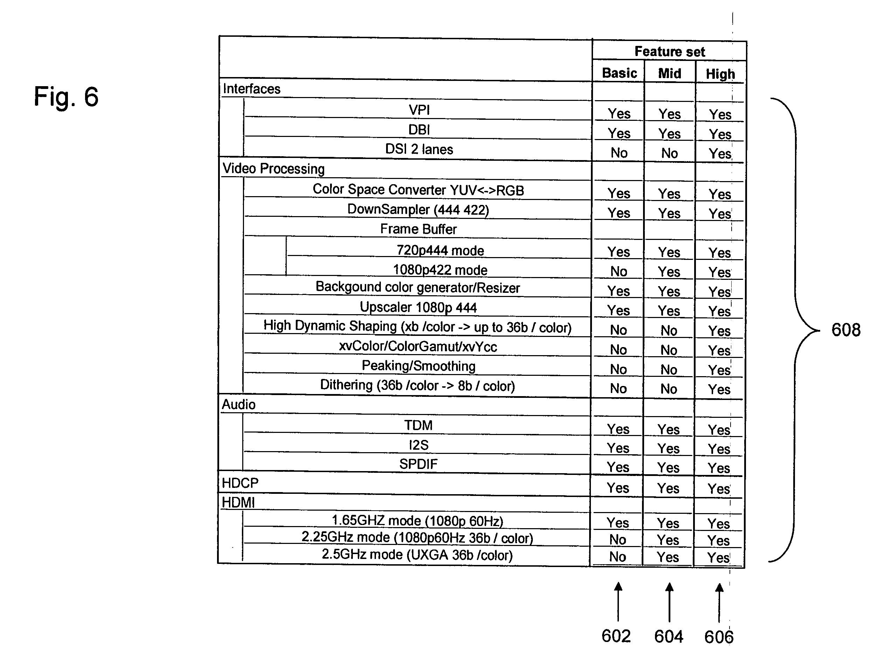

Figure 6 illustrates schematically a feature set 608 according to an embodiment of the invention. The features set consists of various functions that can be performed by hardware components such as interface components, video processing components etc. Three different functional states 602, 604, 606 are illustrated in Figure 6, and it can be seen that different ones of the functions are available for use in each function state 602, 604, 606. In this example, the functional states 602, 604, 606 are referred to as "basic", "mid" and "high" functional states.

One or more embodiments described herein can provide additional feature capability, possibly for a limited amount of time, and can expand application for more complex business models. For instance, a pay TV operator may be provided with the functionality to test adoption of a high-definition (HD) broadcast service by offering a free trial period. The pay TV operator could then decide to activate the HD decoding feature of the set top box (STB) based only on the real market adoption of the HD service they offer. With that possibility, the pay TV operator may be more inclined to massively deploy HD capable STB's and alleviate logistical issues related to management of standard definition (SD) and HD box deployment in the knowledge that they would not have to support the whole CAPEX initially. For an IC manufacturer, embodiments of the invention can provide the possibility of selling higher value products, and monetize a flexible business scheme, while keeping competitors who only can only provide low cost SD boxes at bay.

One or more embodiments may provide an IC feature management system (ICFM) with extended functionality, wherein all features under the ICFM may be enabled for a limited amount of time.

In some embodiments, when features under an ICFM are unlocked, the unlocking is not time bounded. It may be acceptable for unlocking to be performed at each power up, providing that it does not significantly affect boot time.

It may also be possible to unlock ICs produced in different time periods with a single software update (especially from previous time periods). If a lock feature is used, the device may notify the software about it and disregard the request (that is, it must continue to work as if no request has been made).

It may be possible for an authorized person to demonstrate the ICFM protected features in the field without compromising the ICFM system, for example by manually unlocking/enabling all of the features of the device.

Feature control per individual IC may be provided by an embodiment of the invention. Chain of certificates could be used for individual addressing of an IC. Also, time bounded-feature unlocking may be provided,-and this may require an IC to be aware of absolute time passing, for example by processing a clock signal.

It will be appreciated to the skilled reader that any mentioned device and/or other features of particular mentioned device may be provided by apparatus arranged such that they become configured to carry out the desired operations only when enabled, e.g. switched on, or the like. In such cases, they may not necessarily have the appropriate software loaded into the active memory in the non-enabled (e.g. switched off state) and only load the appropriate software in the enabled (e.g. on state). The apparatus may comprise hardware circuitry and/or firmware. The apparatus may comprise software loaded onto memory. Such software/computer programs may be recorded on the same memory/processor and/or on one or more memories/processors.

In some embodiments, a particular mentioned device may be pre-programmed with the appropriate software to carry out desired operations, and wherein the appropriate software can be enabled for use by a user downloading a "key", for example, to unlock/enable the software and its associated functionality.

It will be appreciated that the any mentioned device/chips/circuitry/elements/processor may have other functions in addition to the mentioned functions, and that these functions may be performed by the same device/chips/circuitry/elements/processor. One or more disclosed aspects may encompass the electronic distribution of associated computer programs and computer programs (which may be source/transport encoded) recorded on an appropriate carrier (e.g. memory, signal).

It will be appreciated that any "processor" described herein can comprise a collection of one or more individual processors/processing elements that may or may not be located on the same circuit board, or the same region/position of a circuit board or even the same device. In some embodiments one or more of any mentioned processors may be distributed over a plurality of devices. The same or different processor/processing elements may perform one or more functions described herein.

It will be appreciated that the term "signalling" may refer to one or more signals transmitted as a series of transmitted and/or received signals. The series of signals may comprise one, two, three, four or even more individual signal components or distinct signals to make up said signalling. Some or all of these individual signals may be transmitted/received simultaneously, in sequence, and/or such that they temporally overlap one another.

## Claims

1. An electronic device (100) having a first and second functional state, the device comprising:
a receiver (1) configured to receive signalling,
a processor (3) electrically connected to the receiver (1),
one or more hardware components (4) that are electrically connected to the processor (3) and that are configured to be able to provide one or more functions, wherein:
a first set of functions selected from the one or more functions are available for use in the first state, and
a second set of functions selected from the one or more functions are available for use in the second state, the device further comprising
memory (2) electrically connected to the processor (3), the memory (2) configured to have one or more identification codes stored thereon,
wherein the processor (3) is configured to process signalling received by the receiver (1) in accordance with one or more of the identification codes to determine an intended state of the device (100), the processor (3) further configured to set the state of the device (100) in accordance with the determined intended state.

2. The device as claimed in Claim 1, wherein the memory (2) comprises a feature mask, the feature mask comprises one or more settable flags that correspond to, and define, the availability of one or more of the functions.

3. The device as claimed in Claim 2, wherein the processor (3) is configured to set the state of the device by setting or unsetting flags of the feature mask.

4. The device (100) as claimed in Claim 1, wherein the memory (2) comprises one or more parameters or codes that are configurable in accordance with the state of the device.

5. The device as claimed in any preceding Claim, wherein the processor (3) is configured to process the signalling to identify whether the signalling provides instructions describing the intended state of the device, and to set the state of the device in accordance with these instructions.

6. The device as claimed in Claim 5, wherein the processor (3) is configured to check the instructions against the identification codes, and further configured to set the state of the device in accordance with the instructions when the instructions correspond to one or more, or all of the identification codes.

7. The device as claimed in Claim 6, wherein the processor (3) is configured to set the state of the device in accordance with the instructions when the instructions correspond to a date stamp identification code stored on the memory (2).

8. The device as claimed in Claim 6, wherein the processor (3) is configured to check correspondence between the instructions and one or more of the identification codes by comparing the instructions against said identification codes.

9. The device as claimed in Claim 2, wherein the processor (3) is configured to set the state of the device in accordance with the feature mask by making the first or second set of functions available for use, and/or making the other set of functions unavailable for use.

10. The device as claimed in any preceding Claim, wherein the identification codes comprise one or more codes of the following: date stamp, client ID, manufacturer ID, public key, private key.

11. The device as claimed in any preceding Claim, wherein the processor (3) is configured to process the signalling by one or more of: decrypting, encrypting, comparing, matching, summing, multiplying, convolving, devolving, splitting, joining, etc, the signalling with one or more of said identification codes to determine said instructions.

12. The device as claimed in any preceding Claim, wherein the second set of functions comprises a greater number of functions than the first set of functions.

13. The device of any preceding Claim having one or more further functional states, further comprising one or more further sets of functions selected from the one or more functions that are available for use in the one or more further functional states.

14. A method for controlling one or more hardware components (4) configured to be able to provide a plurality of functions of a device (100), the device (100) having a first and second functional state, the device (100) comprising:
one or more hardware components (4) configured to be able to provide one or more functions, wherein:
a first set of functions selected from the one or more functions are available for use in the first state, and
a second set of functions selected from the one or more functions are available for use in the second state, the device further comprising
memory (2) configured to have one or more identification codes stored thereon, the method comprising:
receiving signalling;
processing said signalling in accordance with the one or more identification codes to determine an intended state of the device (100); and
setting the state of the device (100) in accordance with the determined intended state.

15. A computer readable medium comprising computer code stored thereon, the computer code being configured to, when executed on a computer, perform the method of Claim 14 or configure the electronic device of any one of Claims 1 to 13.
